# EUROPÄISCHE PATENTSCHRIFT

(11) **EP 2 465 310 B1**
(45) Veröffentlichungstag und Bekanntmachung des Hinweises auf die Patenterteilung: **04.12.2013**
(21) Anmeldenummer: 10732942.7
(22) Anmeldetag: 13.07.2010
(51) Int. Cl.: H04W 56/00, G01S 13/76

(54) **VERFAHREN UND ANORDNUNG ZUR LAUFZEITMESSUNG EINES SIGNALS ZWISCHEN ZWEI STATIONEN DER ANORDNUNG**
METHOD AND ARRANGEMENT FOR MEASURING DELAY OF A SIGNAL BETWEEN TWO STATIONS OF THE ARRANGEMENT
PROCÉDÉ ET AGENCEMENT POUR LA MESURE DE LA DURÉE DE PROPAGATION D'UN SIGNAL ENTRE DEUX STATIONS DE L'AGENCEMENT

(30) Priorität: 11.08.2009 DE 102009036937
(43) Veröffentlichungstag der Anmeldung: 20.06.2012
(73) Patentinhaber: Siemens Aktiengesellschaft, 80333 München (DE)
(72) Erfinder: HÜTTNER, Jörg, 81825 München (DE); ZIROFF, Andreas, 84032 Passau (DE); GIERLICH, Roland, 53359 Rheinbach (DE)
(86) Internationale Anmeldenummer: PCT/EP2010/060014
(87) Internationale Veröffentlichungsnummer: WO 2011/018286

(56) Entgegenhaltungen:
- EP-A2- 0 676 650
- WO-A1-99/61936
- US-A1- 2008 106 461

## Beschreibung

Die Erfindung betrifft ein Verfahren und eine Anordnung zur Bestimmung der Laufzeit eines Signals zwischen einer ersten Station und einer zweiten Station der Anordnung mit dem Ziel, den räumlichen Abstand zwischen den Stationen zu bestimmen.

Eine genaue Bestimmung der Position eines Funksenders bzw. des Abstands des Funksenders von einer Basisstation o.ä. ist bspw. im industriellen Umfeld von Bedeutung. Dabei ist es neben der Forderung nach kosten- und stromsparenden Messsystemen insbesondere für Anwendungen in geschlossenen Räumen oder Hallen aufgrund von möglichen Mehrwegereflexionen notwendig, Messsysteme mit hoher Auflösung einzusetzen, um Fehler in der Abstandsmessung zu vermeiden. Bspw. UWB-Signale ("ultra wide band" bzw. Ultra-Breitband) bieten eine hohe Signalbandbreite und versprechen deshalb eine vergleichsweise hohe Auflösung und eine höhere Genauigkeit.

Für die Positions- bzw. Abstandsbestimmung sind verschiedene Methoden bekannt, die bspw. optische Signale, UltraschallSignale oder Funksensoriken nutzen. Insbesondere die Verfahren zur bistatischen Abstandsmessung mit Hilfe von Funksignalen lassen sich in drei Kategorien einteilen:
- Kommunikationsbasierte Systeme: Hier wird zusätzlich aus dem Kommunikationssignal die Entfernung bestimmt. Da in vielen Kommunikationssystemen geringere Ansprüche an die Synchronisation gestellt werden bzw. ein nur sehr schmalbandiger Funkkanal zur Verfügung steht, sind keine hohen erreichbaren Genauigkeiten der Abstandsmessung zu erwarten.
- FMCW-/FSCW-Lösungen: Diese Systeme arbeiten in den ISM-Bändern ("Industrial, Scientific, and Medical") und ermöglichen die Bestimmung eines Entfernungswertes ähnlich wie beim klassischen FMCW-Radar durch das Durchstimmen einer Sendefrequenz. Dabei werden zum Einen transponderbasierte bzw. Backscatter-Lösungen eingesetzt und zum Anderen Empfänger, die sich hierauf synchronisieren können.
- UWB-Systeme: Diese Systeme nutzen neue Regulierungsvorschriften aus, die die Aussendeung von sehr breitbandigen Signalen erlauben, die jedoch eine sehr geringe spektrale Leistungsdichte aufweisen. Die Empfängerarchitekturen können bspw. Leistungsdetektoren mit mäßiger Leistungsfähigkeit sein oder auch kohärente Empfänger, die entweder sehr lange Korrelationszeiten benötigen oder eine extrem hohe Abtastrate.

Im speziellen für eine eindimensionale Abstandsmessung zwischen zwei Funkstationen stellen diese Lösungen einen Kostenaufwand dar, da in zumindest einer der beiden Stationen komplexe Signalverarbeitungsschritte notwendig sind.

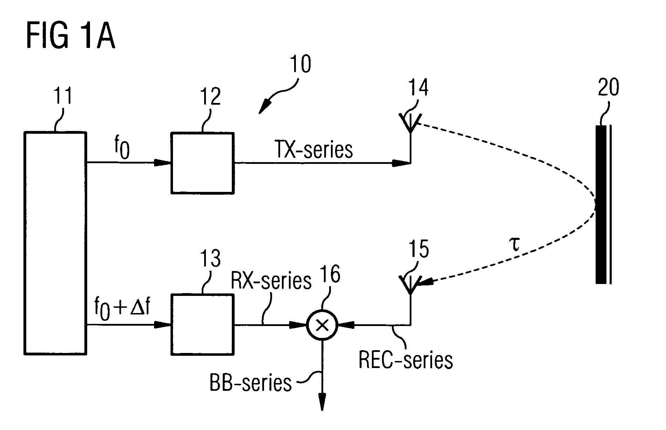

Die Figur 1A zeigt das an sich bekannte Prinzip der Abstandsmessung zwischen einer Sende-Empfangsstation 10 und einem Objekt 20. Die Sende-Empfangsstation 10 weist eine Phasenregelschleife 11 ("phase locked loop" bzw. PLL) auf, welche einen ersten 12 und einen zweiten Pulsgenerator 13 ansteuert. Der erste Pulsgenerator 12 erzeugt daraufhin eine erste Serie TX-series von Signalpulsen TX-puls(i) mit i=0, 1, 2, 3, ... mit einer Pulswiederholrate f₀. Der zweite Pulsgenerator 13 erzeugt dementsprechend eine zweite Serie RX-series von Signalpulsen RX-puls (j) mit j=0,1,2,3,... mit einer Pulswiederholrate f₀+Δf. Dabei kann angenommen werden, dass bspw. die Signalpulse TX-puls(0) und RX-puls(0) gleichzeitig erzeugt werden.

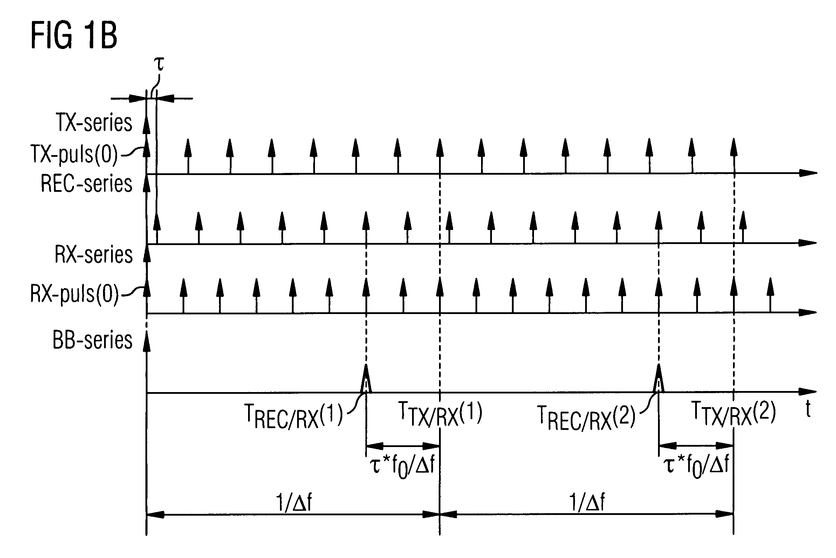

Da sich die Pulswiederholraten um den Betrag Δf unterscheiden, fallen Signalpulse der ersten Serie TX-series und der zweiten Serie RX-series regelmäßig in zeitlichen Abständen 1/Δf, d.h. zu Zeitpunkten T_{TX/RX}(a) = a * 1/Δf + c mit a=0, 1, 2, 3..., zusammen. Dabei ist c lediglich eine Konstante, die davon abhängt, wie der Zeitpunkt t=0 festgelegt wird (bspw. im Falle der Figur 1B ist c=0).

Die erste Serie TX-series wird nun von einer Antenne 14 der Sende-Empfangsstation 10 abgestrahlt und an dem Objekt 20, dessen Abstand zur Sende-Empfangsstation 10 ermittelt werden soll, reflektiert.

Die erste Serie TX-series bzw. deren Signalpulse TX-puls (i) wird am Objekt 20 reflektiert und mittels einer zweiten Antenne 15 der Sende-Empfangsstation 10 empfangen. An der Antenne 15 steht somit eine weitere Serie REC-series von Signalpulsen REC-puls(i) zur Verfügung, die wie die erste Serie TX-series eine Pulswiederholrate f₀ aufweist, die aber gegenüber der Serie TX-series entsprechend der Signallaufzeit τ zeitlich verschoben ist. Dabei ist die Signallaufzeit τ derart definiert, dass τ den Zeitraum angibt, den ein Signal benötigt, um von der Sende-Empfangsstation 10 zum Objekt 20 und wieder zurück zu gelangen. Dementsprechend ist die empfangene Serie REC-series gegenüber der ausgesendeten Serie TX-series um τ verschoben.

Das Empfangssignal RX-series mit der Pulswiederholrate f₀ wird einem Mischer 16 zugeführt, in dem es mit der zweiten Serie RX-series von Signalpulsen RX-puls (j) mit einer Pulswiederholrate f₀+Δf korreliert wird. Fallen die Signalpulse der beiden Serien zusammen, so ist das Signal im Basisband detektierbar, d.h. im Mischer 16 wird eine Serie BB-series mit Signalpulsen BB-puls(k) generiert, die jeweils dann einen Signalpuls BB-puls(k) aufweist, wenn ein Signalpuls RX-puls(j) von RX-series zeitlich mit einem Signalpuls REC-puls(i) von REC-series zusammenfällt. Dies geschieht zu Zeitpunkten T_{REC/RX}(b) = b * 1/Δf - τ * f0/Δf + c mit b=0, 1, 2, 3,... und c=konstant (siehe oben).

Der zeitliche Abstand Δ zwischen einem Zeitpunkt T_{TX/RX}(a) des zeitlichen Zusammentreffens zweier Pulse der Serien TX-series und RX-series und einem Zeitpunkt T_{REC/TX}(b) des zeitlichen Zusammentreffens zweier Pulse der Serien REC-series und RX-se-ries, Δ = τ * f0/Δf, ist nun bei a = b proportional zur Laufzeit τ und damit auch zum Abstand zwischen der Sende-Empfangsstation 10 und dem Objekt 20.

In der Figur 1B ist das Zeitverhalten der verschiedenen Pulsserien TX-series, RX-series, RX-series und BB-series dargestellt. Die Signalpulse TX-puls(0) und RX-puls(0) wurden gleichzeitig erzeugt. Das Empfangssignal REC-series ist aufgrund der Laufzeit τ gegenüber der ersten Pulsserie TX-series zeitlich verschoben. Das Ergebnis BB-series der im Mischer 16 stattfindenden Korrelation der Serien REC-series und RX-series ist im unteren Bereich des Diagramms dargestellt. Der Vergleich des Zeitpunkts T_{REX/RX}(1) mit T_{TX/RX}(1) liefert die Signallaufzeit τ. Gleiches gilt natürlich für einen Vergleich der Zeitpunkte T_{REC/RX}(2) mit T_{TX/RX}(2) etc., d.h. der Vergleich der Zeitpunkte T_{REC/RX}(a) mit T_{TX/RX}(a) liefert die gesuchte Laufzeit.

Das vorgestellte Verfahren geht jedoch davon aus, dass Sender und Empfänger in ein und derselben Station untergebracht sind bzw. dass durch die PLL 11 eine gemeinsame Zeitskala für die verschiedenen Signalserien festgelegt wird, dass also Sender und Empfänger synchronisiert sind. Mit diesem Verfahren kann demnach lediglich der Abstand zu einem Objekt gemessen werden, nicht aber der Abstand zwischen zwei Stationen. Wenn der Sender und der Empfänger voneinander getrennt sind und bspw. nicht von einer gemeinsamen PLL gespeist werden, muss zur Messung der Entfernung zwischen Sender und Empfänger zunächst eine Synchronisation hergestellt werden.

Es ist daher die Aufgabe der vorliegenden Erfindung, ein Verfahren und eine Anordnung zur Bestimmung der Laufzeit eines Signals zwischen einer ersten und einer zweiten Station anzugeben.

Diese Aufgabe wird durch die in den unabhängigen Ansprüchen angegebenen Erfindungen gelöst. Vorteilhafte Ausgestaltungen ergeben sich aus den abhängigen Ansprüchen.

Die vorliegende Erfindung beschreibt insbesondere eine Möglichkeit zur Synchronisation von UWB-Pulsen und ermöglicht somit die Bestimmung des Abstands zwischen zwei Stationen.

Bei der erfindungsgemäßen Lösung wird zur Bestimmung der Signallaufzeit τ zwischen einer ersten Station und einer zweiten Station zunächst in der ersten Station eine erste Serie TX100-ser von ersten Signalpulsen mit einer ersten Pulswiederholrate f1 erzeugt. In der zweiten Station werden daraufhin eine zweite Serie TX200-serP von zweiten Signalpulsen mit einer zweiten Pulswiederholrate f2 und eine dritte Serie TX200-serM von dritten Signalpulsen mit einer dritten Pulswiederholrate f3 erzeugt, wobei für die Pulswiederholraten in der zweiten Station gilt f2 = f1 + Δf und f3 = f1 - Δf. Die zweite TX200-serP und die dritte Serie TX200-serM werden nun von der zweiten Station an die erste Station übertragen und dort empfangen, woraufhin die an der ersten Station empfangenen Serien REC100-serP, REC100-serM einem Korrelator, insbesondere einem Mischer, zugeführt werden. Dort werden die Serien mit der ersten Serie korreliert, wobei eine resultierende Serie BB100-ser von Signalpulsen erzeugt wird. Aus dem zeitlichen Abstand Δ zweier aufeinander folgender Signalpulse der resultierenden Serie BB100-ser wird schließlich die Signallaufzeit τ bestimmt.

Im Korrelator wird jeweils dann ein Signalpuls der resultierenden Serie BB100-ser generiert, wenn ein Signalpuls der ersten Serie TX100-ser zeitlich mit einem Signalpuls der empfangenen Serien REC100-serP, REC100-serM zusammenfällt.

Vorteilhafterweise werden die zweite und die dritte Serie zunächst zu einer weiteren Serie überlagert, indem die zweite und die dritte Serie insbesondere addiert werden. Anschließend werden die zweite und die dritte Serie in Form der weiteren Serie an die erste Station übertragen und dort empfangen.

In einer alternativen Ausführungsform werden die zweite und die dritte Serie vor dem Übertragen an die erste Station einem Schalter der zweiten Station zugeführt, wobei der Schalter derart gesteuert wird, dass er abwechselnd die zweite oder die dritte Serie auswählt und die ausgewählte Serie an die erste Station übertragen und dort empfangen wird.

Der Schalter ist derart angesteuert, dass er jeweils zu demjenigen Zeitpunkt umschaltet, an dem die Pulse der zweiten Serie und der dritten Serie gleichzeitig erzeugt werden.

Vorteilhafterweise werden die zweite Serie TX200-serP und die dritte Serie TX200-serM mit einer festen Phasenbeziehung zueinander erzeugt.

Die zweite Pulswiederholrate f2 und die dritte Pulswiederholrate f3 werden von einer Phasenregelschleife der zweiten Station geregelt.

Dabei wird die zweite Serie TX200-serP von einem Pulsgenerator erzeugt, wobei der Pulsgenerator von der Phasenregelschleife derart geregelt wird, dass die zweite Serie TX200-serP die zweite Pulswiederholrate f2 aufweist. Weiterhin wird die dritte Serie TX200-serM von einem Pulsgenerator erzeugt, wobei dieser Pulsgenerator von der Phasenregelschleife derart geregelt wird, dass die dritte Serie TX200-serM die dritte Pulswiederholrate f3 aufweist.

Darüber hinaus wird zunächst die erste Serie TX100-ser von der ersten Station an die zweite Station übertragen und dort empfangen. Die an der zweiten Station empfangene Serie REC200-ser wird einem Korrelator der zweiten Station zugeführt, wo die empfangene Serie REC200-ser mit der zweiten Serie TX200-serP oder mit der dritten Serie TX200-serM korreliert wird. Dabei wird ein Signal BB200-ser erzeugt, welches der Phasenregelschleife zugeführt wird. die Phasenregelschleife ihrerseits stellt basierend auf dem Signal BB200-sig die zweite Pulswiederholrate f2 und die dritte Pulswiederholrate f3 zur Verfügung.

Die Aufgabe wird auch gelöst mit Hilfe einer Anordnung zur Bestimmung der Signallaufzeit τ zwischen einer ersten Station der Anordnung und einer zweiten Station der Anordnung, wobei
- die erste Station einen ersten Pulsgenerator aufweist, mit dem eine erste Serie TX100-ser von ersten Signalpulsen mit einer ersten Pulswiederholrate f1 erzeugbar ist,
- die zweite Station einen zweiten und einen dritten Pulsgenerator aufweist, wobei mit dem zweiten Pulsgenerator eine zweite Serie TX200-serP von zweiten Signalpulsen mit einer zweiten Pulswiederholrate f2 und mit dem dritten Pulsgenerator eine dritte Serie TX200-serM von dritten Signalpulsen mit einer dritten Pulswiederholrate f3 erzeugbar ist, wobei für die Pulswiederholraten gilt f2=f1+Δf und f3=f1-Δf,
- die zweite Station eine Sendevorrichtung zum Übertragen der zweiten TX200-serP und der dritten Serie TX200-serM an die erste Station aufweist,
- die erste Station eine Empfangsvorrichtung zum Empfangen der ausgesendeten Serien und einen Korrelator zum Korrelieren der empfangenen Serien REC100-serP, REC100-serM mit der ersten Serie TX100-ser aufweist, wobei bei der Korrelation eine resultierende Serie BB100-ser erzeugt wird, und
- die erste Station eine Auswerteeinheit aufweist, mit der ein zeitlicher Abstand Δ zwischen zwei aufeinanderfolgenden Signalpulsen der resultierenden Serie BB100-ser ermittelbar ist.

Vorteilhafterweise weist die zweite Station einen Schalter auf, der mit dem zweiten und dem dritten Pulsgenerator und mit der Sendevorrichtung verbunden ist. Der Schalter ist ausgebildet, um die zweite Serie TX200-serP oder die dritte Serie TX200-serM zur Übertragung an die erste Station auszuwählen.

Weiterhin weist die erste Station eine Sendevorrichtung zum Übertragen der ersten Serie TX100-ser an die zweite Station auf. Außerdem weist die zweite Station eine Empfangsvorrichtung zum Empfangen der ausgesendeten ersten Serie TX100-ser sowie einen Korrelator zum Korrelieren der empfangenen ersten Serie REC200-ser mit der zweiten TX200-serP oder mit der dritten Serie TX200-serM auf. Bei der Korrelation wird ein Signal BB200-ser erzeugt, welches einer Phasenregelschleife der zweiten Station zugeführt ist. Die Phasenregelschleife regelt basierend auf dem Signal BB200-ser den zweiten und den dritten Pulsgenerator.

Ein Vorteil der Erfindung gegenüber dem Stand der Technik ist darin zu sehen, dass sich durch eine geringe Erweiterung des PLL-Kreises und der Empfangseinheit ein bistatisches Abstandsmesssystem aus zwei Pulsradaren erzeugen lässt. Weiterhin zeichnet sich das System durch seine Einfachheit in der Signalverarbeitung aus. Hohe Abtastraten werden durch ein sukzessives Abtasten umgangen und es wird eine Art Zeitspreizung erzeugt. Da das Basisbandsignal bei geeigneter Aussendung einen symmetrischen Verlauf erhält, vereinfacht sich dadurch auch die Abstandsauswertung. Mehrkanalreflexionen mit einer höheren Laufzeit liegen weiter auseinander. Die kompletten PLL-Schaltungen können in einem Mikrocontroller realisiert werden. Grundsätzlich ist das erfindungsgemäße Verfahren auf verschiedene Pulsradarverfahren anwendbar, bspw. auch auf Verfahren, bei denen sukzessive Rauschsequenzen korreliert werden.

Weitere Vorteile, Merkmale und Einzelheiten der Erfindung ergeben sich aus dem im Folgenden beschriebenen Ausführungsbeispiel sowie anhand der Zeichnungen.

Dabei zeigt:
- Figur 1A, B: eine Vorrichtung zur Laufzeitmessung nach dem Stand der Technik sowie ein entsprechendes Zeitdiagramm mit den erzeugten Pulsen,
- Figur 2A, B: eine erfindungsgemäße Anordnung zur Messung der Laufzeit zwischen einer ersten und einer zweiten Station sowie ein Zeitdiagramm mit den hierbei erzeugten Signalpulsen.

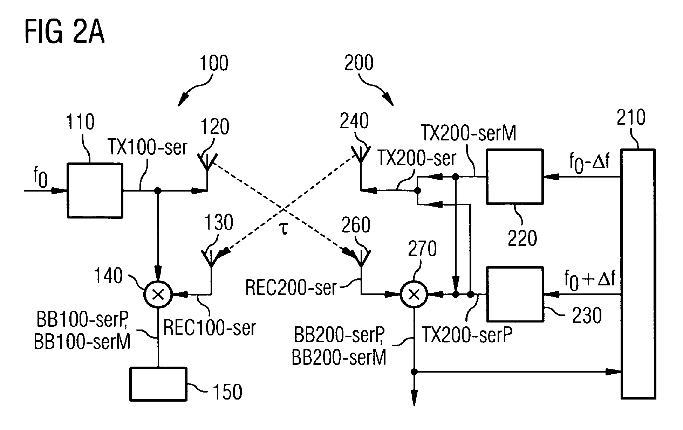

Die Figur 2A zeigt eine Übersicht über eine erfindungsgemäße Anordnung 1 zur Bestimmung eines Abstands zwischen einer ersten Station 100 und einer zweiten Station 200. Die erste Station 100 weist einen Pulsgenerator 110 auf, der vergleichbar mit dem ersten Pulsgenerator 11 der Figur 1A eine erste Serie TX100-ser von Signalpulsen TX100-puls(i) mit i=0, 1, 2, 3, ... mit einer Pulswiederholrate f₀ erzeugt. Die Serie TX100-ser wird über eine Antenne 120 der ersten Station 100 abgestrahlt und nach einer Laufzeit τ von einer Antenne 260 der zweiten Station 200 empfangen. An der Antenne 260 der zweiten Station 200 steht somit eine weitere Serie REC200-ser von Signalpulsen zur Verfügung, die der Serie TX100-ser entspricht, gegenüber dieser aber um die Signallaufzeit τ zeitlich verschoben ist. Die Laufzeit τ ist hier im Unterschied zum oben im Zusammenhang mit den Figuren 1A, 1B beschriebenen Verfahren derart definiert, dass τ den Zeitraum angibt, den ein Signal benötigt, um von der ersten Station 100 zur zweiten Station 200 zu gelangen oder umgekehrt.

Weiterhin wird die Serie TX100-ser einem Mischer 140 der ersten Station 100 zugeführt.

Die zweite Station 200 weist eine PLL 210 auf, welche einen ersten 220 und einen zweiten Pulsgenerator 230 der zweiten Station 200 ansteuert. Der erste Pulsgenerator 220 erzeugt daraufhin eine Serie TX200-serP von Signalpulsen TX200-pulsP (j) mit j=0, 1, 2, 3,... mit einer Pulswiederholrate f2=f₀+Δf. Der zweite Pulsgenerator 230 erzeugt dementsprechend eine Serie TX200-serM von Signalpulsen TX200-pulsM(k) mit k=0, 1, 2, 3, ... mit einer Pulswiederholrate f3=f₀-Δf. Dabei ist wesentlich, dass die Serien TX200-serP und TX200-serM mit einer festen Phasenbeziehung zueinander erzeugt werden. Bspw. die ersten Pulse TX200-pulsP(0) und TX200-pulsM(0) der beiden entsprechenden Serien werden mit einem bestimmten und bekannten zeitlichen Abstand zueinander erzeugt, idealerweise gleichzeitig. D.h. die Pulse TX200-pulsP(0) und TX200-pulsM(0) treten gleichzeitig auf und werden auch wie unten beschrieben gleichzeitig ausgestrahlt sowie gleichzeitig an der ersten Station 100 empfangen. Schon für die zweiten Pulse TX200-pulsP(1) und TX200-pulsM(1) ist diese Gleichzeitigkeit wegen der unterschiedlichen Pulswiederholraten der Serien TX200-serP und TX200-serM schon nicht mehr gegeben.

Insbesondere müssen f2 und f3 im Bezug auf f1 die gleiche Phasenlage in der zweiten Station 200 haben.

Grundsätzlich ist es natürlich möglich, nicht zwei separate Pulsgeneratoren zu verwenden, sondern lediglich einen einzelnen Pulsgenerator, der jedoch geeignet sein muss, die beiden Serien zu erzeugen.

Die zweite Station 200 synchronisiert sich mit der ersten Station 100, indem die von der ersten Station 100 empfangene Pulsserie REC200-ser, die bis auf einen zeitlichen Versatz der von der ersten Station 100 ausgesendeten Pulsserie TX100-ser entspricht, zunächst einem Korrelator 270, bspw. einem Mischer, zugeführt wird. Dem Korrelator 270 werden außerdem die im ersten Pulsgenerator 220 erzeugte Serie TX200-serP sowie die im zweiten Pulsgenerator 230 erzeugte Serie TX200-serM zugeführt. Im Korrelator 270 werden Serien BB200-serP, BB200-serM erzeugt, wobei BB200-serP (bzw. BB200-serM) einen Puls aufweist, wenn ein Pulse von TX200-serP (bzw. TX200-serM) zeitlich mit einem Puls von REC200-ser zusammenfällt. Mit den dem Korrelator 270 entnehmbaren Serien BB200-serP, BB200-serM wird die PLL 210 angesteuert, die ihrerseits basierend hierauf die beiden Pulsgeneratoren 220, 230 derart steuert, dass diese die Serien mit den beiden Pulswiederholraten f2=f₀+Δf und f3=f₀-Δf erzeugen.

Die von der ersten Station 100 ausgesendete Signalpulseserie TX100-ser wird demnach in der zweiten Station 200 empfangen, indem das empfangene Signal REC200-ser einem Korrelator 270 zugeführt wird, in dem es mit den Pulsserien der zweiten Station TX200-serP bzw. TX200-serM korreliert wird. Die Regelung von f2 und f3 erfolgt in einer Weise, dass die aus der Korrelation reultierende Serie BB200-serP und BB200-serM zusammenfallen.

Die in den Pulsgeneratoren 220, 230 erzeugten Serien TX200-serM und TX200-serP werden der Antenne 240 der zweiten Station 200 zugeführt und von dieser abgestrahlt. Im in der Figur 2A dargestellten Ausführungsbeispiel werden die beiden Serien TX200-serM und TX200-serP zunächst im Prinzip einfach einander überlagert, d.h. sie werden mit Hilfe der entsprechenden, dem Fachmann bekannten elektronischen Mittel bspw. addiert. Die daraus entstehenden Serie TX200-ser, die anschließend abgestrahlt wird, besteht dementsprechend aus einer Vielzahl von Pulsen, die jedoch keine feste Pulswiederholrate aufweisen.

Die abgestrahlte Serie TX200-ser der zweiten Station 200 wird nach der Laufzeit τ von einer Antenne 130 der ersten Station 100 empfangen. An der Antenne 130 steht somit eine weitere Serie REC100-ser von Signalpulsen REC100-puls(1) mit l=0,1,2,3,... zur Verfügung, die der Serie TX200-ser entspricht, gegenüber dieser aber um die Signallaufzeit τ zeitlich verschoben ist. Die empfangene Serie REC100-ser wird dem Mischer 140 zugeführt und dort mit der Serie TX100-ser des Pulsgenerators 110 der ersten Station 100 korreliert.

Im Mischer 140 wird eine Serie BB100-ser mit Signalpulsen BB100-puls (m) mit m=0, 1, 2, 3,... generiert, die jeweils dann einen Signalpuls BB100-puls(m) aufweist, wenn ein Signalpuls TX100-puls(i) von TX100-ser zeitlich mit einem Signalpuls REC100-puls(1) von REC100-ser zusammenfällt.

Die Serie BB100-ser wird schließlich einer Auswerteeinheit 150 zugeführt, in der ein zeitlicher Abstand Δ zwischen zwei aufeinanderfolgenden Signalpulsen der resultierenden Serie BB100-ser ermittelbar ist.

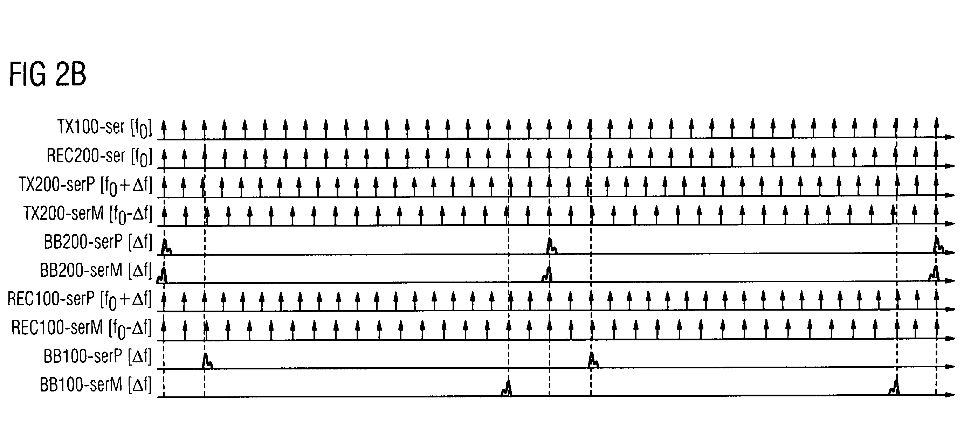

In der Figur 2B ist das Zeitverhalten der verschiedenen Pulsserien TX100-ser, REC200-ser, TX200-serP, TX200-serM, BB200-ser, REC100-serP, REC100-serM, BB100-serP und BB100-serM dargestellt. Ebenfalls in der Figur 2B vermerkt sind die jeweiligen Pulswiederholraten der verschiedenen Serien. Dabei sind die beiden einzelnen zur Serie TX200-ser zusammengefassten Serien TX200-serP und TX200-serM getrennt voneinander dargestellt. Dementsprechend sind auch zwei einzelne Serien REC100-serP und REC100-serM dargestellt, die von der Antenne 130 empfangen würden, wenn TX200-serP und TX200-serM tatsächlich separat übertragen würden. Ebenso sind dementsprechend Serien BB100-serP und BB100-serM dargestellt, die im Mischer 140 erzeugt würden, wenn TX200-serP und TX200-serM separat übertragen und empfangen würden. Bspw. würde BB100-serM aus der Korrelation von REC100-serM mit TX100-ser hervorgehen.

Anhand der Signalserien BB100-serM und BB100-serP lässt sich die Signallaufzeit τ ermitteln, indem der zeitliche Abstand Δ zwischen einem Signalpuls BB100-pulsM(n) der Serie BB100-serM und einem darauf folgenden Signalpuls BB100-pulsP(o) der Serie BB100-serP bestimmt wird (n, o=0, 1, 2, 3,...), wobei bspw. gelten kann n=o. Für diesen zeitlichen Abstand gilt Δ = 2 * τ * f0/Δf, d.h. Δ ist proportional zur Laufzeit τ und damit proportional zum räumlichen Abstand zwischen der ersten Station 100 und der zweiten Station 200.

Eine mögliche Fehlerquelle bei der Ermittlung der korrekten Laufzeit τ kann grundsätzlich darin liegen, dass bspw. der zeitliche Abstand Δ zwischen einem Puls BB100-pulsM(n) und einem Puls BB100-pulsP(o) mit n≠o bestimmt wird. Der korrekte Abstandswert aus Δ und Δ' kann jedoch dadurch leicht ausgewählt werden, dass aufgrund der technischen Gegebenheiten klar ist, dass nur der Wert der richtige Wert sein kann.

Da der zeitliche Abstand zwischen BB100-serM und BB100-serP proportional zum gemessenen Abstand bzw. zur Laufzeit τ ist, kann durch die Einschränkung des Messbereichs eine eindeutige Zuordung erfolgen.

Die zur Berechnung des Diagramms der Figur 2B verwendeten Pulswiederholraten entsprechen nicht den realen Verhältnissen. Bspw. würde zur erfindungsgemäßen Abstands- bzw. Laufzeitmessung eine Grundfrequenz f₀=5MHz sowie ein Frequenzversatz Δf=50Hz verwendet. Dementsprechend würden die Pulse BB100-pulsP(0) und BB100-pulsM(0) zeitlich näher zusammen liegen, während die Pulse BB100-pulsP(0) und BB100-pulsM(1) weiter auseinander liegen würden. Die Auswahl des korrekten, d.h. kleineren Pulsabstandes wäre demnach einfach und eindeutig.

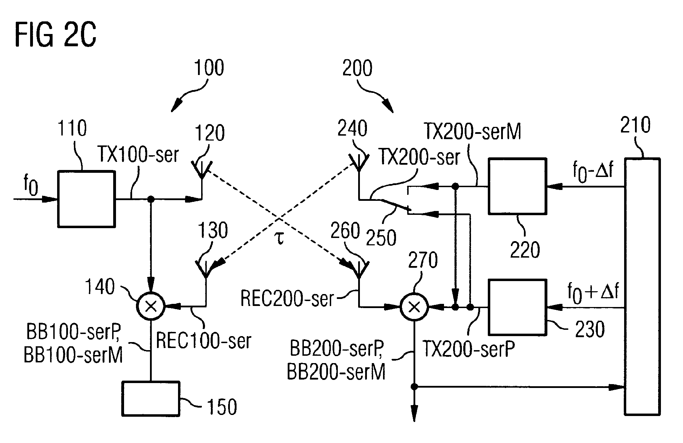

In der Figur 2C ist eine alternative Ausführungsform dargestellt, in der die beiden in den Pulsgeneratoren 220, 230 erzeugten Serien TX200-serP und TX200-serM nicht direkt der Antenne 240 zugeführt werden. Mit Hilfe eines Schalters 250 wird ausgewählt, welche der beiden Pulsserien zu welchem Zeitpunkt ausgestrahlt wird. Die von der Antenne 240 abgestrahlte Pulsserie TX200-ser entspricht also im Zeitraum zwischen den Zeitpunkten t₀ und t₁ der Serie TX200-serP und in einem daran anschließenden Zeitraum t₁ bis t₂ der anderen Serie TX200-serM. Im darauf folgenden Zeitraum t₂ bis t₃ wird wieder die Serie TX200-serP ausgestrahlt usw. Die Arbeitsweise in der ersten Station 100 sowie die Ermittlung der Laufzeit τ ist hiervon unabhängig und läuft ab wie im Zusammenhang mit den Figuren 2A und 2B beschrieben.

Der Schalter 250 wird demnach derart gesteuert, dass abwechselnd jeweils eine Gruppe von Pulsen der einen und der anderen Serie TX200-serM bzw. TX200-serP übertragen wird. D.h. es werden bspw. zunächst mehrere Pulse der Serie TX200-serM ausgesendet, anschließend mehrere Pulse der Serie TX200-serP, darauf folgend wiederum mehrere Pulse der Serie TX200-serM usw. Dabei wird die Anzahl der Pulse, die zu einer Gruppe gehören müssen, so festgelegt bzw. ausgewählt, dass die aus der Korrelation in der ersten Station 100 resultierenden Pulsserien BB100-serM beziehungsweise BB100-serP existieren.

Der Schalter ist konkret derart angesteuert, dass er jeweils zu demjenigen Zeitpunkt umschaltet, an dem die Pulse der zweiten Serie TX200-serP und der dritten Serie TX200-serM gleichzeitig erzeugt werden. Vorteilhafterweise wird die zweite Serie TX200-serP nach den im Mischer 270 erzeugten synchronen Korrelationssignalen BB200-serP und BB200-serM, und TX200-serM vor den Korrelationssignalen BB200-serP und BB200-serM übertragen.

Andere Methoden zum Aussenden der Serien TX200-serM und TX200-serP sind natürlich ebenfalls denkbar. Bspw. können die einzelnen Pulse der beiden Serien mit Hilfe eines entsprechenden Schalters 250 (siehe Figur 2C) abwechselnd über die Antenne 240 abgestrahlt werden.

## Patentansprüche

1. Verfahren zur Bestimmung der Signallaufzeit τ zwischen einer ersten Station (100) und einer zweiten Station (200), bei dem
- in der ersten Station (100) eine erste Serie (TX100-ser) von ersten Signalpulsen mit einer ersten Pulswiederholrate f1 erzeugt wird,
- in der zweiten Station (200) eine zweite Serie (TX200-serP) von zweiten Signalpulsen mit einer zweiten Pulswiederholrate f2 und eine dritte Serie (TX200-serM) von dritten Signalpulsen mit einer dritten Pulswiederholrate f3 erzeugt wird, wobei für die Pulswiederholraten in der zweiten Station (200) gilt f2=f1+Δf und f3=f1-Δf,
- die zweite (TX200-serP) und die dritte Serie (TX200-serM) von der zweiten Station (200) an die erste Station (100) übertragen und dort empfangen werden,
- die an der ersten Station (100) empfangenen Serien (REC100-serP, RC100-serM) einem Korrelator (140), insbesondere einem Mischer, zugeführt und im Korrelator (140) mit der ersten Serie (TX100-ser) korreliert werden, wobei eine resultierende Serie (BB100-ser) von Signalpulsen erzeugt wird, und
- aus dem zeitlichen Abstand Δ zweier aufeinander folgender Signalpulse der resultierenden Serie (BB100-ser) die Signallaufzeit τ bestimmt wird.

2. Verfahren nach Anspruch 1, **dadurch gekennzeichnet, dass** im Korrelator (140) jeweils dann ein Signalpuls der resultierenden Serie (BB100-ser) generiert wird, wenn ein Signalpuls der ersten Serie (TX100-ser) zeitlich mit einem Signalpuls der empfangenen Serien (REC100-serP, REC100-serM) zusammenfällt.

3. Verfahren nach Anspruch 1 oder 2, **dadurch gekennzeichnet, dass** die zweite (TX200-serP) und die dritte Serie (TX200-serM) in der zweiten Station (200) zunächst zu einer weiteren Serie (TX200-ser) überlagert werden, indem die zweite (TX200-serP) und die dritte Serie (TX200-serM) insbesondere addiert werden, und anschließend die zweite (TX200-serP) und die dritte Serie (TX200-serM) in Form der weiteren Serie (TX200-er) an die erste Station (100) übertragen und dort empfangen werden.

4. Verfahren nach Anspruch 1 oder 2, **dadurch gekennzeichnet, dass** die zweite (TX200-serP) und die dritte Serie (TX200-serM) vor dem Übertragen an die erste Station (100) einem Schalter (250) der zweiten Station (200) zugeführt werden, wobei der Schalter (250) derart gesteuert wird, dass er abwechselnd die zweite (TX200-serP) oder die dritte Serie (TX200-serM) auswählt, und die ausgewählte Serie an die erste Station (100) übertragen und dort empfangen wird.

5. Verfahren nach Anspruch 4, **dadurch gekennzeichnet, dass** der Schalter (250) derart angesteuert wird, dass er jeweils zu demjenigen Zeitpunkt umschaltet, an dem die Pulse der zweiten Serie (TX200-serP) und der dritten Serie TX200-serM gleichzeitig erzeugt werden.

6. Verfahren nach einem der vorhergehenden Ansprüche, **dadurch gekennzeichnet, dass** die zweite Serie (TX200-serP) und die dritte Serie (TX200-serM) mit einer festen Phasenbeziehung zueinander erzeugt werden.

7. Verfahren nach einem der vorhergehenden Ansprüche, **dadurch gekennzeichnet, dass** die zweite Pulswiederholrate f2 und die dritte Pulswiederholrate f3 von einer Phasenregelschleife (210) der zweiten Station (200) geregelt werden.

8. Verfahren nach Anspruch 7, **dadurch gekennzeichnet, dass**
- die zweite Serie (TX200-serP) von einem Pulsgenerator (220) erzeugt wird, wobei der Pulsgenerator (220) von der Phasenregelschleife (210) derart geregelt wird, dass die zweite Serie (TX200-serP) die zweite Pulswiederholrate f2 aufweist, und/oder
- die dritte Serie (TX200-serM) von einem Pulsgenerator (230) erzeugt wird, wobei der Pulsgenerator (230) von der Phasenregelschleife (210) derart geregelt wird, dass die dritte Serie (TX200-serM) die dritte Pulswiederholrate f3 aufweist.

9. Verfahren nach Anspruch 7 oder 8, **dadurch gekennzeichnet, dass**
- die erste Serie (TX100-ser) von der ersten Station (100) an die zweite Station (200) übertragen und dort empfangen wird,
- die an der zweiten Station (200) empfangene Serie (REC200-ser) einem Korrelator (270) der zweiten Station (200) zugeführt wird, wo die empfangene Serie (REC200-ser) mit der zweiten Serie (TX200-serP) oder mit der dritten Serie (TX200-serM) korreliert wird, wobei ein Signal (BB200-ser) erzeugt wird, und
- das Signal (BB200-sig) der Phasenregelschleife (210) zugeführt wird und
- die Phasenregelschleife (210) ihrerseits basierend auf dem Signal (BB200-sig) die zweite Pulswiederholrate f2 und die dritte Pulswiederholrate f3 zur Verfügung stellt.

10. Anordnung zur Bestimmung der Signallaufzeit τ zwischen einer ersten Station (100) der Anordnung und einer zweiten Station (200) der Anordnung, wobei
- die erste Station (100) einen ersten Pulsgenerator (110) aufweist, mit dem eine erste Serie (TX100-ser) von ersten Signalpulsen mit einer ersten Pulswiederholrate f1 erzeugbar ist,
- die zweite Station (200) zumindest einen weiteren Pulsgenerator (220, 230) aufweist, wobei mit dem weiteren Pulsgenerator (220, 230) eine zweite Serie (TX200-serP) von zweiten Signalpulsen mit einer zweiten Pulswiederholrate f2 und eine dritte Serie (TX200-serM) von dritten Signalpulsen mit einer dritten Pulswiederholrate f3 erzeugbar ist, wobei für die Pulswiederholraten gilt f2=f1+Δf und f3=f1-Δf,
- die zweite Station (200) eine Sendevorrichtung (240) zum Übertragen der zweiten (TX200-serP) und der dritten Serie (TX200-serM) an die erste Station (100) aufweist,
- die erste Station (100) eine Empfangsvorrichtung (130) zum Empfangen der ausgesendeten Serien und einen Korrelator (140) zum Korrelieren der empfangenen Serien (REC100-serP, REC100-serM) mit der ersten Serie (TX100-ser) aufweist, wobei bei der Korrelation eine resultierende Serie (BB100-ser) erzeugt wird, und
- die erste Station (100) eine Auswerteeinheit (150) aufweist, mit der ein zeitlicher Abstand Δ zwischen zwei aufeinanderfolgenden Signalpulsen (BB100-pulsM(n), BB100-pulsP(o); n,o=0,1,2,3,...; n=o) der resultierenden Serie (BB100-ser) ermittelbar ist.

11. Anordnung nach Anspruch 10, **dadurch gekennzeichnet, dass** die zweite Station (200) einen Schalter (250) aufweist, der mit dem weiteren Pulsgenerator (220, 230) und mit der Sendevorrichtung (240) verbunden ist und der ausgebildet ist, um die zweite (TX200-serP) oder die dritte Serie (TX200-serM) zur Übertragung an die erste Station (100) auszuwählen.

12. Anordnung nach Anspruch 9 oder 10, **dadurch gekennzeichnet, dass**
- die erste Station (100) eine Sendevorrichtung (120) zum Übertragen der ersten Serie (TX100-ser) an die zweite Station (200) aufweist,
- die zweite Station (200) eine Empfangsvorrichtung (260) zum Empfangen der ausgesendeten ersten Serie (TX100-ser) sowie einen Korrelator (270) zum Korrelieren der empfangenen ersten Serie (REC200-ser) mit der zweiten (TX200-serP) und/oder mit der dritten Serie (TX200-serM) aufweist, wobei bei der Korrelation ein Signal (BB200-serP, BB200-serM) erzeugt wird, und
- die zweite Station (200) eine Phasenregelschleife (210) aufweist, der das Signal (BB200-serP, BB200-serM) zugeführt ist und die basierend auf dem Signal (BB200-serP, BB200-serM) den weiteren Pulsgenerator (220, 230) regelt.

## Claims

1. Method for determining the signal propagation delay τ between a first station (100) and a second station (200), wherein
- a first series (TX100-ser) of first signal pulses is generated in the first station (100) at a first pulse-repetition rate f1,
- a second series (TX200-serP) of second signal pulses is generated in the second station (200) at a second pulse-repetition rate f2 and a third series (TX200-serM) of third signal pulses is generated in it at a third pulse-repetition rate f3, with f2=f1+Δf and f3=f1-Δf applying to the pulse-repetition rates in the second station (200),
- the second (TX200-serP) and third series (TX200-serM) are transmitted by the second station (200) to the first station (100) and received there,
- the series (REC100-serP, RC100-serM) received at the first station (100) are fed to a correlator (140), in particular a mixer, and correlated in the correlator (140) with the first series (TX100-ser), with a resulting series (BB100-ser) of signal pulses being generated, and
- the signal propagation delay τ is determined from the time distance Δ between two successive signal pulses of the resulting series (BB100-ser).

2. Method according to claim 1, **characterised in that** a signal pulse of the resulting series (BB100-ser) will be generated in the correlator (140) whenever a signal pulse of the first series (TX100-ser) coincides in time with a signal pulse of the received series (REC100-serP, REC100-serM).

3. Method according to claim 1 or 2, **characterised in that** the second (TX200-serP) and third series (TX200-serM) in the second station (200) are first mutually superimposed to form a further series (TX200-ser) particularly by adding the second (TX200-serP) and third series (TX200-serM), and **in that** the second (TX200-serP) and third series (TX200-serM) are then transmitted to the first station (100) in the form of the further series (TX200-ser) and received there.

4. Method according to claim 1 or 2, **characterised in that** the second (TX200-serP) and third series (TX200-serM) are fed to a switch (250) belonging to the second station (200) before being transmitted to the first station (100), with the switch (250) being controlled such as to alternately select the second (TX200-serP) or third series (TX200-serM), with the selected series being transmitted to the first station (100) and received there.

5. Method according to claim 4, **characterised in that** the switch (250) is driven such as to change over the instant the second-series (TX200-serP) pulses and third-series (TX200-serM) pulses are generated simultaneously.

6. Method according to one of the preceding claims, **characterised in that** the second series (TX200-serP) and third series (TX200-serM) are generated having a fixed mutual phase relationship.

7. Method according to one of the preceding claims, **characterised in that** second pulse-repetition rate f2 and third pulse-repetition rate f3 are controlled by a phase-locked loop (210) belonging to the second station (200).

8. Method according to claim 7, **characterised in that**
- the second series (TX200-serP) is generated by a pulse generator (220), with the pulse generator (220) being controlled by the phase-locked loop (210) such that the second series (TX200-serP) has second pulse-repetition rate f2, and/or
- the third series (TX200-serM) is generated by a pulse generator (230), with the pulse generator (230) being controlled by the phase-locked loop (210) such that the third series (TX200-serM) has third pulse-repetition rate f3.

9. Method according to claim 7 or 8, **characterised in that**
- the first series (TX100-ser) is transmitted by the first station (100) to the second station (200) and received there,
- the series (REC200-ser) received at the second station (200) is fed to a correlator (270) belonging to the second station (200) where the received series (REC200-ser) will be correlated with the second series (TX200-serP) or the third series (TX200-serM), with a signal (BB200-ser) being generated, and
- the signal (BB200-sig) is fed to the phase-locked loop (210) and
- the phase-locked loop (210) in turn makes second pulse-repetition rate f2 and third pulse-repetition rate f3 available based on the signal (BB200-sig).

10. Arrangement for determining the signal propagation delay τ between a first station (100) in the arrangement and a second station (200) in the arrangement, with
- the first station (100) having a first pulse generator (110) by means of which a first series (TX100-ser) of first signal pulses can be generated at a first pulse-repetition rate f1,
- the second station (200) having at least one further pulse generator (220, 230), with its being possible by means of the further pulse generator (220, 230) to generate a second series (TX200-serP) of second signal pulses at a second pulse-repetition rate f2 and a third series (TX200-serM) of third signal pulses at a third pulse-repetition rate f3, with f2=f1+Δf and f3=f1-Δf applying to the pulse-repetition rates,
- the second station (200) having a transmitting device (240) for transmitting the second (TX200-serP) and third series (TX200-serM) to the first station (100),
- the first station (100) having a receiving device (130) for receiving the transmitted series and a correlator (140) for correlating the received series (REC100-serP, REC100-serM) with the first series (TX100-ser), with a resulting series (BB100-ser) being generated during correlation, and
- the first station (100) having an evaluation unit (150) by means of which a time distance Δ between two successive signal pulses (BB100-pulsM(n), BB100-pulsP(o); n,o=0,1,2,3,...; n=o) of the resulting series (BB100-ser) can be ascertained.

11. Arrangement according to claim 10, **characterised in that** the second station (200) has a switch (250) which is connected to the further pulse generator (220, 230) and to the transmitting device (240) and is embodied for selecting the second (TX200-serP) or third series (TX200-serM) for being transmitted to the first station (100).

12. Arrangement according to claim 9 or 10, **characterised in that**
- the first station (100) has a transmitting device (120) for transmitting the first series (TX100-ser) to the second station (200),
- the second station (200) has a receiving device (260) for receiving the transmitted first series (TX100-ser) as well as a correlator (270) for correlating the received first series (REC200-ser) with the second (TX200-serP) and/or the third series (TX200-serM), with a signal (BB200-serP, BB200-serM) being generated during correlation, and
- the second station (200) has a phase-locked loop (210) to which the signal (BB200-serP, BB200-serM) has been fed and which controls the further pulse generator (220, 230) based on the signal (BB200-serP, BB200-serM).

## Revendications

1. Procédé pour déterminer le temps de propagation de signaux τ entre une première station (100) et une deuxième station (200), selon lequel :
- une première série (TX100-ser) de premières impulsions de signaux est générée dans la première station (100) avec un premier taux de répétition des impulsions f1;
- dans la deuxième station (200) sont générées une deuxième série (TX200-serP) de deuxièmes impulsions de signaux avec un deuxième taux de répétition des impulsions f2 et une troisième série (TX200-serM) de troisièmes impulsions de signaux avec un troisième taux de répétition des impulsions f3, avec f2 = f1 + Δf et f3 = f1 - Δf pour les taux de répétition des impulsions dans la deuxième station (200) ;
- la deuxième série (TX200-serP) et la troisième série (TX200-serM) sont transmises de la deuxième station (200) à la première station (100) où elles sont reçues ;
- les séries (REC100-serP, REC100-serM) reçues au niveau de la première station (100) sont envoyées sur un corrélateur (140), et plus particulièrement sur un mélangeur, et sont corrélées avec la première série (TX100-ser) dans le corrélateur (140), une série résultante (BB100-ser) d'impulsions de signaux étant générée ; et
- le temps de propagation des signaux τ est déterminé à partir de la distance temporelle Δ entre deux impulsions de signaux successives de la série résultante (BB100-ser).

2. Procédé selon la revendication 1, **caractérisé en ce qu'**est respectivement générée, dans le corrélateur (140), une impulsion de signal de la série résultante (BB100-ser) lorsqu'une impulsion de signal de la première série (TX100-ser) coïncide temporellement avec une impulsion de signal des séries reçues (REC100-serP, REC100-serM).

3. Procédé selon la revendication 1 ou 2, **caractérisé en ce que** la deuxième série (TX200-serP) et la troisième série (TX200-serM) sont tout d'abord superposées à une autre série (TX200-ser) dans la deuxième station (200), notamment par addition de la deuxième série (TX200-serP) et de la troisième série (TX200-serM), et **en ce que** la deuxième série (TX200-serP) et la troisième série (TX200-serM) sont ensuite transmises sous la forme de l'autre série (TX200-ser) à la première station (100) et y sont reçues.

4. Procédé selon la revendication 1 ou 2, **caractérisé en ce que** la deuxième série (TX200-serP) et la troisième série (TX200-serM) sont envoyées sur un commutateur (250) de la deuxième station (200) avant la transmission à la première station (100), le commutateur (250) étant commandé de manière telle qu'il sélectionne alternativement la deuxième série (TX200-serP) ou la troisième série (TX200-serM), et **en ce que** la série sélectionnée est transmise à la première station (100) et y est reçue.

5. Procédé selon la revendication 4, **caractérisé en ce que** le commutateur (250) est commandé de manière telle qu'il commute respectivement à l'instant où sont générées simultanément les impulsions de la deuxième série (TX200-serP) et de la troisième série (TX200-serM).

6. Procédé selon l'une des revendications précédentes, **caractérisé en ce que** la deuxième série (TX200-serP) et la troisième série (TX200-serM) sont générées avec une relation de phase fixe entre elles.

7. Procédé selon l'une des revendications précédentes, **caractérisé en ce que** le deuxième taux de répétition des impulsions f2 et le troisième taux de répétition des impulsions f3 sont réglés par une boucle de réglage de phase (210) de la deuxième station (200).

8. Procédé selon la revendication 7, **caractérisé en ce que** :
- la deuxième série (TX200-serP) est générée par un générateur d'impulsions (220), le générateur d'impulsions (220) étant réglé de manière telle par la boucle de réglage de phase (210) que la deuxième série (TX200-serP) présente le deuxième taux de répétition des impulsions f2 et/ou
- la troisième série (TX200-serM) est générée par un générateur d'impulsions (230), le générateur d'impulsions (230) étant réglé de manière telle par la boucle de réglage de phase (210) que la troisième série (TX200-serM) présente le troisième taux de répétition des impulsions f3.

9. Procédé selon la revendication 7 ou 8, **caractérisé en ce que** :
- la première série (TX100-ser) est transmise de la première station (100) à la deuxième station (200) et y est reçue ;
- la série (REC200-ser) reçue au niveau de la deuxième station (200) est envoyée sur un corrélateur (270) de la deuxième station (200) où la série reçue (REC200-ser) est corrélée avec la deuxième série (TX200-serP) ou avec la troisième série (TX200-serM), un signal (BB200-ser) étant généré ; et
- le signal (BB200-sig) est envoyé sur la boucle de réglage de phase (210) ; et
- la boucle de réglage de phase (210), de son côté, met à disposition, sur la base du signal (BB200-sig), le deuxième taux de répétition des impulsions f2 et le troisième taux de répétition des impulsions f3.

10. Agencement pour déterminer le temps de propagation de signaux τ entre une première station (100) et une deuxième station (200), selon lequel :
- la première station (100) comporte un premier générateur d'impulsions (110) qui permet de générer une première série (TX100-ser) de premières impulsions de signaux avec un premier taux de répétition des impulsions f1 ;
- la deuxième station (200) comporte au moins un autre générateur d'impulsions (220, 230), l'autre générateur d'impulsions (220, 230) permettant de générer une deuxième série (TX200-serP) de deuxièmes impulsions de signaux avec un deuxième taux de répétition des impulsions f2 et une troisième série (TX200-serM) de troisièmes impulsions de signaux avec un troisième taux de répétition des impulsions f3, avec f2 = f1 + Δf et f3 = f1 - Δf pour les taux de répétition des impulsions ;
- la deuxième station (200) comporte un dispositif émetteur (240) pour la transmission de la deuxième série (TX200-serP) et de la troisième série (TX200-serM) à la première station (100) ;
- la première station (100) comporte un dispositif récepteur (130) pour recevoir les séries émises et un corrélateur (140) pour corréler les séries reçues (REC100-serP, REC100-serM) avec la première série (TX100-ser), une série résultante (BB100-ser) étant générée lors de la corrélation ; et
- la première station (100) comporte une unité d'évaluation (150) qui permet de déterminer une distance temporelle Δ entre deux impulsions de signaux successives (BB100-pulsM(n), BB100-pulsP(o) ; n,o = 0, 1, 2, 3, ... ; n = o) de la série résultante (BB100-ser).

11. Agencement selon la revendication 10, **caractérisé en ce que** la deuxième station (200) comporte un commutateur (250) qui est relié à l'autre générateur d'impulsions (220, 230) et au dispositif émetteur (240) et qui est conçu pour sélectionner la deuxième série (TX200-serP) ou la troisième série (TX200-serM) pour transmission à la première station (100).

12. Agencement selon la revendication 9 ou 10, **caractérisé en ce que** :
- la première station (100) comporte un dispositif émetteur (120) pour transmettre la première série (TX100-ser) à la deuxième station (200) ;
- la deuxième station (200) comporte un dispositif récepteur (260) pour recevoir la première série émise (TX100-ser) ainsi qu'un corrélateur (270) pour corréler la première série reçue (REC200-ser) avec la deuxième série (TX200-serP) et/ou avec la troisième série (TX200-serM), un signal (BB200-serP, BB200-serM) étant généré lors de la corrélation ; et
- la deuxième station (200) comporte une boucle de réglage de phase (210) sur laquelle le signal (BB200-serP, BB200-serM) est envoyé et qui règle l'autre générateur d'impulsions (220, 230) sur la base du signal (BB200-serP, BB200-serM).
